# FASCICULE DE BREVET EUROPEEN

(11) **EP 1 001 117 B1**
(45) Date de publication et mention de la délivrance du brevet: **03.09.2003**
(21) Numéro de dépôt: 99402694.6
(22) Date de dépôt: 29.10.1999
(51) Int. Cl.: E05B 49/00, B60R 25/00, G07C 9/00

(54) **Système pour sécuriser une transmission bidirectionnelle de données pour l'accès a un espace clos, en particulier pour l'accès a un véhicule**
System zum Sichern einer bidirektionellen Datenübertragung für den Zugang zu einem abgeschlossenen Raum, insbesondere für den Zugang zu einem Fahrzeug
System for ensuring the security of a bidirectional data transmission for the access to an enclosed space, in particular for the access to a vehicle

(30) Priorité: 13.11.1998 FR 9814261
(43) Date de publication de la demande: 17.05.2000
(73) Titulaire: VALEO SECURITE HABITACLE, 94000 Créteil (FR)
(72) Inventeur: Avenel, Jean-Jacques, 94430 Chennevieres, Marne (FR)
(74) Mandataire: Hervouet, Sylvie

(56) Documents cités:
- DE-C- 4 409 167
- FR-A- 2 664 062
- US-A- 4 484 183
- US-A- 5 309 144

## Description

L'invention est relative à un système pour sécuriser une transmission bidirectionnelle de données, pour l'accès à un espace clos, système du genre de ceux qui comprennent un dispositif d'identification, avec circuit d'émission et circuit de réception, installé dans l'espace clos, et un identifiant porté par un utilisateur qui souhaite obtenir l'accès, un échange de données entre dispositif d'identification et identifiant étant prévu pour s'établir normalement lorsque la distance entre l'identifiant et le dispositif d'identification est inférieure à une limite prédéterminée, l'accès n'étant autorisé que lorsque le dispositif d'identification a authentifié l'identifiant.

L'invention concerne plus particulièrement, parce que c'est dans ce cas que son application semble devoir présenter le plus d'intérêt, mais non exclusivement, un système pour sécuriser l'accès à un véhicule automobile dont les ouvrants, en particulier les portières de l'habitacle, comportent des serrures commandées par le système d'accès.

Dans ce type de système, l'utilisateur, pour obtenir l'accès, doit tout d'abord faire débuter une opération d'identification. Ce démarrage de l'opération peut être obtenu, par exemple, par action sur un bouton de commande situé sur l'ouvrant, ou par une commande à distance, ou éventuellement par un détecteur de présence installé dans l'espace clos. D'une manière générale, ce démarrage de l'opération d'identification est prévu pour nécessiter la proximité de l'utilisateur relativement à l'espace clos où il souhaite accéder.

L'opération d'identification s'effectue sur la base d'un échange de données entre le dispositif d'identification et l'identifiant constitué, par exemple, par un badge avec transpondeur électromagnétique. Suite au déclenchement de l'opération, le dispositif d'identification, installé dans l'espace clos, émet en général un signal d'interrogation qui active l'identifiant, lequel renvoie un signal codé analysé par le dispositif d'identification. Si le signal codé correspond au code autorisé, le dispositif d'identification autorise l'accès, par exemple en déverrouillant une ou des serrures. Les signaux échangés sont généralement des signaux électromagnétiques.

Pour renforcer la sécurité, le système est conçu de telle sorte que la portée de transmission soit réduite et qu'un échange de données d'identification entre dispositif d'identification et identifiant ne peut normalement s'établir que lorsque la distance entre l'espace clos et l'identifiant est inférieure à une limite prédéterminée, par exemple de l'ordre d'une dizaine de mètres. Un tel système est connu par DE-C-4 409 167.

Malgré ces précautions, un tel système d'accès court le risque d'être piraté par un autre ensemble d'émission-réception intercalé dans la liaison entre le dispositif d'identification et l'identifiant, cet autre ensemble d'émission-réception servant en fait uniquement de répéteur.

Par exemple, deux malfaiteurs agissant de conserve pourraient obtenir l'accès à l'espace clos de la manière suivante. Un premier malfaiteur, équipé d'un système d'émission-réception installé par exemple dans une sacoche, s'approche du véhicule fermé que vient de quitter un utilisateur autorisé, tandis qu'un second malfaiteur, équipé d'un système d'émission-réception semblable à celui du premier malfaiteur, suit l'utilisateur autorisé portant l'identifiant. Lorsque l'utilisateur autorisé est suffisamment éloigné, le premier malfaiteur déclenche une opération d'identification, par exemple par appui sur un bouton de commande situé sur un ouvrant. Les signaux émis par le dispositif d'identification sont relayés par le système d'émission-réception du premier malfaiteur vers le système du second malfaiteur, ' qui répète les signaux du dispositif d'identification vers l'identifiant. Ce dernier va alors répondre par le code autorisé, qui est retransmis par le système répéteur jusqu'au dispositif d'identification qui commande le déverrouillage des serrures et donne accès au malfaiteur.

L'invention a pour but, surtout, de fournir un système qui permet de sécuriser une transmission bidirectionnelle de données pour l'accès à un espace clos, en empêchant une éventuelle violation par un ensemble pirate d'émission-réception tel que celui évoqué ci-dessus. Il est en outre souhaitable que le système de sécurisation soit fiable, d'une utilisation simple, pratique, et économique.

Selon l'invention, un système pour sécuriser une transmission bidirectionnelle de données, pour l'accès à un espace clos, en particulier à un véhicule, du genre défini précédemment, est caractérisé par le fait que, pour empêcher un échange de données d'identification à une distance supérieure à la limite prédéterminée, en particulier par interposition d'un répéteur non autorisé, entre le dispositif d'identification et l'identifiant, le système comprend des moyens de commutation permettant d'établir un rebouclage momentané du circuit d'émission du dispositif d'identification, avec un circuit retour de l'identifiant, et le dispositif d'identification comprend des moyens de mesure de la fréquence de résonance de l'oscillation générée par un tel rebouclage, et des moyens de commande, sensibles à la différence entre la fréquence ainsi mesurée et une fréquence de référence, pour maintenir l'interdiction d'accès lorsque la différence entre la fréquence mesurée et la fréquence de référence dépasse une valeur prédéterminée.

Ainsi, selon l'invention, on réalise un oscillateur entre le dispositif d'identification et l'identifiant. S'il y a introduction dans la boucle d'un système parasite, tel que celui constitué par un répéteur, la fréquence de résonance est modifiée ; la détection de cette modification permet de maintenir l'interdiction d'accès.

De préférence, les moyens de commutation établissent le rebouclage momentané du circuit d'émission du dispositif d'identification, lors d'une demande d'identification, et du circuit retour de l'identifiant, lorsque la demande d'identification a été authentifiée par l'identifiant.

Selon une première réalisation, le dispositif d'identification comprend un circuit de réception avec un récepteur RF et une unité de gestion avec compteur de fréquence, et un circuit d'émission avec un générateur BF, un amplificateur, et un commutateur propre à brancher, pour le rebouclage, la sortie du récepteur RF directement à l'entrée de l'amplificateur, tandis qu'en fonctionnement normal, l'entrée de cet amplificateur est branchée sur la sortie du générateur BF.

L'identifiant comprend un récepteur BF, en particulier avec contrôle automatique de gain (CAG), un circuit de décodage des données, une unité de gestion, un émetteur RF, et un commutateur propre à brancher, pour le rebouclage, la sortie du récepteur BF directement à l'entrée de l'émetteur RF, tandis qu'en fonctionnement normal, l'entrée de l'émetteur RF est reliée à l'unité de gestion.

Avantageusement, le rebouclage momentané est engendré par l'émission d'un signal d'initialisation par l'émetteur RF de l'identifiant, lequel signal initialise le compteur de l'unité de gestion du dispositif d'identification.

La fréquence de référence, à laquelle est comparée la fréquence de résonance mesurée, est avantageusement constituée par une valeur initialement mémorisée, qui est apprise par le système.

Le circuit d'émission basse fréquence BF du dispositif d'identification est ainsi rebouclé momentanément avec le circuit de retour haute fréquence RF (radiofréquence) du badge ou identifiant.

La fréquence de communication BF du dispositif d'identification vers l'identifiant peut être de 125 KHz, et les antennes d'émission et de réception sont accordées sur cette fréquence, ce qui oblige le système à osciller autour de cette fréquence si la voie de retour est supposée linéaire et sans déphasage à cette fréquence.

La voie de retour est prévue avantageusement en radiofréquence RF à 434 MHz ou autre. La modulation la plus adaptée pour le signal retour semble la modulation de fréquence pour rester le plus linéaire possible. Il convient de réaliser un ensemble d'émission-réception RF dont la bande de modulation soit au moins de 150 KHz.

Bien entendu, les fréquences mentionnées précédemment ne constituent qu'un exemple de réalisation, le système pouvant fonctionner avec des fréquences différentes.

Selon une autre possibilité, entraînant une simplification, le système est prévu pour fonctionner avec des signaux à transmettre et recevoir de type logique "tout ou rien", et travaille en modulation d'amplitude " ON-OFF " (passant-bloqué).

Le dispositif d'identification comprend un oscillateur dont la sortie est reliée à un circuit d'émission et dont l'entrée est reliée à un commutateur propre à brancher, pour le rebouclage, la sortie d'un récepteur RF directement à l'entrée de l'oscillateur, tandis qu'en fonctionnement normal, l'entrée de cet oscillateur est branchée sur la sortie d'un amplificateur opérationnel dont l'entrée non inverseuse est reliée à la masse par une résistance, et l'entrée inverseuse est reliée à la masse par un condensateur, ces deux entrées étant reliées respectivement par une résistance à la sortie du récepteur RF.

L'identifiant comprend un circuit détecteur d'enveloppe dont l'entrée est reliée à un circuit de réception BF et dont la sortie est reliée, d'une part, à un circuit de décodage des données et une unité de gestion et, d'autre part, à un commutateur propre à brancher, pour le rebouclage, la sortie du circuit détecteur d'enveloppe directement à l'entrée d'un émetteur RF, tandis qu'en fonctionnement normal, l'entrée de l'émetteur RF est reliée à l'unité de gestion.

L'ensemble de la boucle d'émission-réception présente un certain temps de retard qui, lié à la constante de temps RC, où C est la valeur de la capacité du condensateur et R est la valeur de la résistance reliés à l'entrée inverseuse de l'amplificateur opérationnel, engendre une oscillation à une fréquence déterminée

S'il y a introduction d'émetteurs relais (répéteurs) dans la boucle, le temps de transit dans la boucle de contre-réaction va augmenter, ce qui provoque une baisse de la fréquence d'oscillation proportionnelle au temps de retard parasite introduit.

Il suffit donc de mesurer la fréquence d'oscillation du système et de s'en servir comme référence à chaque interrogation de l'identifiant.

Pour sortir de ce mode oscillatoire, il suffit d'ouvrir la boucle d'oscillation au niveau de l'identifiant, par exemple par le commutateur prévu entre le détecteur d'enveloppe et l'émetteur RF, ou au niveau du dispositif d'identification.

L'invention consiste, mises à part les dispositions exposées ci-dessus, en un certain nombre d'autres dispositions dont il sera plus explicitement question ci-après à propos d'exemples de réalisation décrits avec référence aux dessins ci-annexés, mais qui ne sont nullement limitatifs.
La Figure 1, de ces dessins, est un schéma synoptique d'un premier exemple de réalisation d'un système pour sécuriser l'accès à un espace clos, en particulier un véhicule, selon l'invention.
La Figure 2, enfin, est un schéma synoptique d'une variante de réalisation du système.

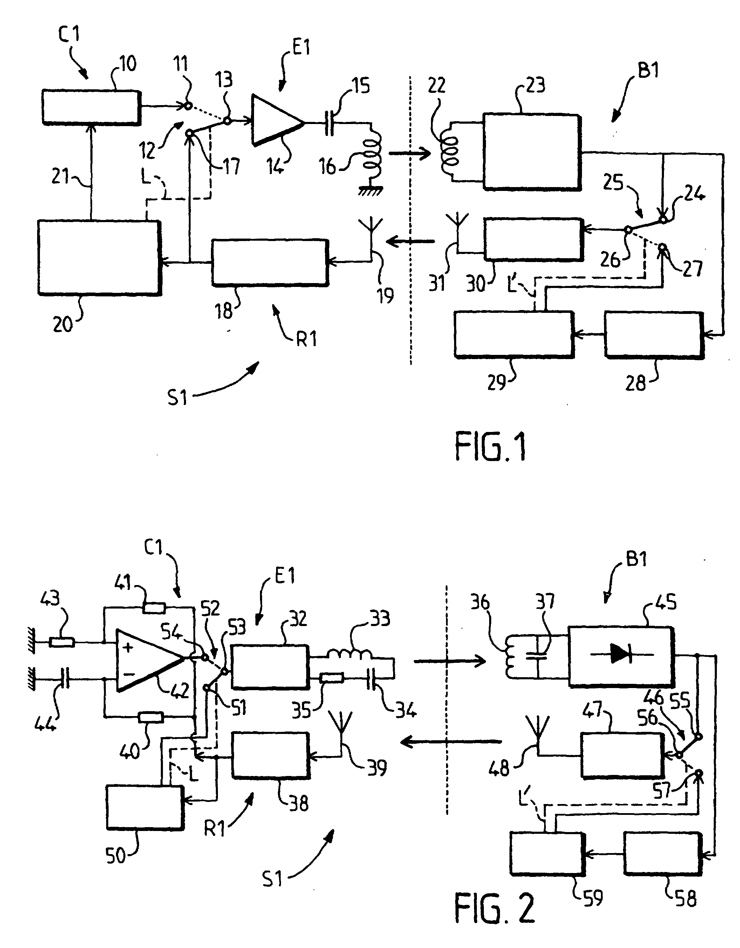

En se reportant à la Figure 1 du dessin on peut voir le schéma d'un système S1 pour sécuriser l'accès à un véhicule.

Ce système S1 comprend un dispositif d'identification C1 avec un circuit E1 d'émission et un circuit R1 de réception. Le dispositif C1 est installé dans le véhicule.

Le système S1 comporte en outre un identifiant constitué par un badge B1 porté par un utilisateur qui souhaite obtenir l'accès au véhicule.

Le circuit d'émission E1 comprend un générateur 10 basse fréquence BF dont la sortie est reliée à une borne 11 d'un commutateur 12 à deux voies, ayant une borne commune 13 reliée à l'entrée d'un amplificateur 14. La sortie de cet amplificateur 14 est reliée à un circuit oscillant constitué par une capacité 15 et une inductance 16 en série, une borne de l'inductance 16 étant reliée à la masse.

L'autre borne 17 du commutateur 12 est reliée à la sortie d'un récepteur 18 radiofréquence RF dont l'entrée est reliée à la sortie d'une antenne 19.

De préférence le récepteur 18 est du type à démodulation FM (modulation de fréquence).

La sortie du récepteur 18 est en outre reliée à une unité de gestion 20 avec compteur de la fréquence de l'oscillation produite. L'unité de gestion 20 comporte une sortie de commande raccordée par une liaison 21 au générateur 10. Une autre sortie de l'unité 20 assure, par une liaison L, la commande du commutateur 12.

Ce commutateur 12 peut prendre deux positions. L'une établit une liaison entre la borne 17 et la borne commune 13 ; cette position est représentée par un trait plein sur la Figure 1. Une autre position représentée en pointillé établit une liaison entre l'autre borne 11 et la borne commune 13.

L'identifiant ou badge B1 comporte une inductance 22 dont les bornes sont reliées à un récepteur BF (basse fréquence) 23, de préférence avec contrôle automatique de gain (CAG). La sortie du récepteur 23 est reliée à une borne 24 d'un commutateur 25 à deux voies comportant une borne commune 26 et une autre borne 27. Ce commutateur 25 peut prendre deux positions : une première position représentée en trait plein sur la Figure 1, pour laquelle la borne 24 est reliée à la borne 26 et une deuxième position, représentée en pointillé, pour laquelle la borne 27 est reliée à la borne 26.

La sortie du récepteur 23 est en outre reliée à une entrée d'un circuit 28 de décodage des données. Une sortie de ce circuit 28 est reliée à une entrée d'une unité de gestion 29 du type microcontrôleur. Une borne de cette unité de gestion 29 est reliée à la borne 27 du commutateur 25.

La borne commune 26 du commutateur 25 est reliée à l'entrée d'un émetteur RF (radiofréquence) 30 fonctionnant en modulation de fréquence (FM). La sortie de l'émetteur 30 est reliée à une antenne 31.

La position du commutateur 25 est commandée par l'unité de gestion 29, grâce à une liaison L' en sortie de cette unité 29.

Le fonctionnement est le suivant.

Le système est conçu pour réaliser un oscillateur entre le dispositif d'identification C1 prévu sur le véhicule et le badge B1 et pour créer l'effet dit "Larsen".

Un oscillateur est par principe un système rebouclé qui présente à une certaine fréquence une condition de phase de 0°, avec un gain de quelques dB.

Lorsqu'une personne s'approche du véhicule équipé du système S1, ce dernier est mis en éveil par un signal de commande. Ce signal peut être émis de diverses manières : par exemple, lorsque la personne actionne la poignée de la portière, un micro-interrupteur associé à ladite poignée bascule dans une position qui établit l'alimentation électrique du système S1 ; l'utilisateur peut également actionner un bouton-poussoir sur un boîtier de télécommande pour envoyer un signal de commande qui est détecté par l'antenne 19 du système S1 du véhicule ; le signal de commande peut être également émis par couplage inductif, lorsque l'utilisateur muni de son badge B1 s'approche du véhicule.

Lorsque le système S1 est mis en éveil, l'unité de gestion 20 commande l'oscillateur 10 pour qu'il émette un signal d'identification codé vers le badge B1. Pour l'émission de ce signal d'identification, le commutateur 12 est dans sa position représentée en pointillés sur la figure 1. Après l'émission de ce signal d'identification, l'unité de gestion 20 fait basculer le commutateur 12 dans sa position illustrée en trait plein sur la figure 1, par l'intermédiaire de la liaison électrique L.

Lorsque le badge B1 reçoit le signal d'identification en basse fréquence provenant du système S1, le commutateur 25 est dans sa position représentée en pointillés sur la figure 1. Dès lors, le signal d'identification codé est reçu par le circuit de décodage 28 qui compare le code d'identification du véhicule avec celui du badge B1. Si les codes correspondent, l'unité de gestion 29 fait basculer, par l'intermédiaire de la liaison L', le commutateur 25 dans sa position représentée en trait plein sur la figure 1. Simultanément, l'émetteur 30 du badge B1 émet une ou plusieurs impulsions en RF, d'une durée de l'ordre de 300 à 400 µs, qui est reçue par l'antenne 19 du système S1. L'impulsion émise par l'émetteur 30 permet d'initialiser le compteur de l'unité de gestion 20.

Dans le cas où plusieurs badges autorisés différents existent pour un même véhicule, et que ces badges émettent au même moment l'impulsion d'initialisation, on peut prévoir que l'émetteur 30 de chaque badge émette une deuxième impulsion, avec un temps de retard différent pour chaque badge, ce qui permet à l'unité de gestion 20 du système S1 d'identifier les différents badges et de leur donner un ordre de priorité, afin de créer l'effet Larsen avec un seul badge. Si l'effet Larsen devait se produire avec plusieurs badges simultanément, il y aurait un risque de brouillage, notamment des battements en radio fréquence, ce qui empêcherait la reconnaissance de la fréquence de résonance. Par exemple, le badge du conducteur peut autoriser l'utilisateur à commander toutes les fonctions du véhicule, alors que le badge d'un passager peut ne pas autoriser le démarrage du véhicule, et un badge peut être prévu pour interdire l'accès au coffre, par exemple un badge destiné à un garagiste devant effectuer des réparations sur le véhicule.

Lors de l'émission de l'impulsion en RF par l'émetteur 30, les deux commutateurs 12 et 25 sont dans leur position représentée en trait plein sur la figure 1, de sorte qu'un rebouclage momentané du circuit d'émission BF (125 KHz) du véhicule vers le badge B1 est réalisé avec le circuit retour RF (radio fréquence ou haute fréquence HF) du badge B1 vers le véhicule.

Le rebouclage engendre dans le dispositif C1 une oscillation dont la fréquence de résonance est mesurée par l'unité de gestion 20 et est comparée, par cette unité de gestion, à une valeur de référence. Cette valeur de référence peut être initialement mémorisée par des moyens de mémoire de l'unité de gestion 20, et être donc apprise par le système alors que le badge B1 se trouve à une distance du dispositif C1 inférieure à une limite prédéterminée. La fréquence de résonance de référence est acquise par l'unité de gestion, pour chaque badge autorisé, lors de la première utilisation, généralement avant la commercialisation du véhicule.

S'il y a introduction dans la boucle ainsi formée d'un système parasite, servant de répéteur, et permettant l'établissement de la boucle alors que le badge B1 se trouve à une distance du dispositif C1 supérieure à la limite prédéterminée, la phase va obligatoirement changer et la fréquence de résonance sera modifiée.

L'unité de gestion 20 en comparant cette fréquence de résonance modifiée à la fréquence de référence peut ainsi établir la présence d'un système parasite et maintenir l'interdiction d'accès.

Si par contre la condition de fréquence est satisfaite, l'unité de gestion 20 assure la poursuite de la procédure d'identification et fait passer le commutateur 12 de la position en trait plein de Fig. 1 à la position en pointillé établissant une liaison entre les bornes 11 et 13. Au niveau du badge B1, l'unité de gestion 29 fait passer le commutateur 25 de la position en trait plein à la position en pointillé reliant les bornes 26 et 27 et interrompant la boucle formée.

On peut prévoir pour le système une fréquence de communication BF de 125 KHz du dispositif C1 vers le badge B1 ; les antennes d'émission et de réception sont accordées sur cette fréquence ce qui oblige le système à osciller autour de cette fréquence si la voie de retour est supposée linéaire et sans déphasage à cette fréquence.

La voie de retour 30, 31, 19, 18 est prévue en radiofréquence, par exemple à 434 MHz, ou à une autre fréquence. La modulation de fréquence semble la plus adaptée, et est utilisée, pour pouvoir rester le plus linéaire possible.

La durée du rebouclage en Larsen peut être de l'ordre de 4 ms.

Bien entendu cette disposition peut s'appliquer à n'importe quelle fréquence, les valeurs énumérées précédemment étant données simplement à titre d'exemple non limitatif.

La Figure 2 du dessin illustre une variante de réalisation plus simple du système S1 selon l'invention. Sur le schéma de Fig.2 on retrouve le dispositif d'identification C1 installé dans le véhicule avec son circuit d'émission E1 et son circuit de réception R1.

Du côté de l'utilisateur on retrouve l'identifiant ou badge B1.

Selon cette variante, comme dans le cas précédent, on réalise un oscillateur entre la liaison BF et la liaison RF, ce qui permet de détecter une éventuelle violation par un système pirate d'émission-réception en détectant une variation de la fréquence d'oscillation du système rebouclé.

Le circuit d'émission E1 comporte un oscillateur 32 basse fréquence, par exemple à 125 KHz, relié en sortie à une inductance 33 branchée en série avec une capacité 34 et une résistance 35, reliée à une autre borne de l'oscillateur 32. L'inductance 33 permet d'établir un couplage avec une autre inductance 36 prévue sur le badge B1, et branchée en parallèle sur une capacité 37.

Le circuit R1 comprend un récepteur 38 à radio- fréquence RF dont une entrée est reliée à une antenne 39. La sortie du récepteur 38 est reliée, d'une part, en parallèle par deux résistances 40, 41 respectivement à l'entrée inverseuse et à l'entrée non inverseuse d'un amplificateur opérationnel 42 et, d'autre part, à l'entrée d'une unité de gestion 50. L'unité 50 est reliée en sortie à une borne 51 d'un commutateur 52 à deux voies, ayant une borne commune 53 reliée à l'entrée de l'oscillateur 32. L'autre borne 54 du commutateur 52 est reliée à la sortie de l'amplificateur opérationnel 42 qui assure l'alimentation de l'oscillateur 32. L'entrée non inverseuse de l'amplificateur 42 est reliée à la masse par une résistance 43, tandis que l'entrée inverseuse de l'amplificateur 42 est reliée à la masse par une capacité 44. L'unité de gestion 50 commande la position du commutateur 52 par une liaison L représentée en traits interrompus.

Au niveau du badge B1, l'inductance 36 et la capacité 37 sont reliées en parallèle aux deux bornes d'entrée d'un circuit 45 détecteur d'enveloppe. La sortie du circuit 45 est reliée à une borne 55 d'un commutateur 46 à deux voies comportant une borne commune 56 et une autre borne 57. Ce commutateur 46 peut prendre deux positions : une première position représentée en trait plein sur la figure 2, pour laquelle la borne 55 est reliée à la borne 56 ; et une deuxième position, représentée en pointillés pour laquelle la borne 57 est reliée à la borne 56.

La sortie du circuit 45 est, en outre, reliée à une entrée d'un circuit 58 de décodage des données. Une sortie de ce circuit 58 est reliée à une entrée d'une unité de gestion 59 du type micro-contrôleur. Une borne de cette unité de gestion 59 est reliée à la borne 57 du commutateur 46.

La borne commune 56 du commutateur 46 est reliée à l'entrée d'un émetteur RF 47 dont la sortie est reliée à une antenne 48. La position du commutateur 46 est commandée par l'unité de gestion 59, grâce à une liaison L' en sortie de cette unité 59.

La structure du système de Fig.2 est celle d'un oscillateur où la contre-réaction est assurée par l'ensemble émission-réception. La simplification réside dans le fait que les signaux à transmettre et recevoir sont de type logique "tout ou rien", ce qui permet de travailler en modulation d'amplitude passant-bloqué (ON-OFF).

Le fonctionnement est le suivant.

Lorsque le dispositif C1 formule une demande d'identification, l'unité de gestion 50 fait basculer le commutateur 52 vers sa position en trait plein et le badge B1 reçoit ladite demande d'identification. L'unité de gestion 59 du badge B1, après identification correcte du code, fait basculer le commutateur 46 vers sa position en trait plein, de sorte que la boucle d'émission-réception est constituée.

Les signaux émis par l'émetteur E1 sont analysés par le détecteur d'enveloppe 45 du badge B1 qui fournit sur sa sortie des signaux de modulation de l'émetteur 47. Les signaux émis par l'émetteur 47 et l'antenne 48 sont recueillis par l'antenne 39 et le récepteur 38.

L'ensemble de la boucle d'émission-réception présente un certain temps de retard qui, en liaison avec une constante de temps RC (R correspond à la valeur de la résistance 40 et C correspond à la valeur de la capacité 44) génère une oscillation à une fréquence bien déterminée.

L'unité de gestion 50 du circuit C1 mesure cette fréquence d'oscillation et la compare à une fréquence déterminée, comme dans le cas de Fig. 1.

S'il y a introduction d'émetteurs relais dans la boucle formée par le dispositif C1 et le badge B1, le temps de transit dans la boucle de contre-réaction va augmenter, ce qui provoque une baisse de la fréquence d'oscillation proportionnelle au temps de retard parasite introduit.

Comme dans le cas de Fig. 1, en mesurant la fréquence d'oscillation du système et en s'en servant comme référence à chaque interrogation de l'identifiant B1, par comparaison avec une valeur prédéterminée, on peut détecter la présence d'émetteur-récepteur relais formant répéteur et interdire, dans le cas d'une telle présence, l'accès.

Pour sortir de ce mode oscillatoire, il suffit d'ouvrir la boucle au niveau du dispositif C1 ou au niveau du badge B1. Dans l'exemple représenté sur Fig.2, cette ouverture peut être assurée par le commutateur 46 dont l'ouverture supprime la liaison entre la sortie du détecteur d'enveloppe 45 et la commande de modulation de l'émetteur RF, et provoque l'arrêt de l'oscillation, ou par le commutateur 52, dont l'ouverture supprime la liaison entre la sortie du récepteur 38 et l'entrée de l'oscillateur 32.

Quelle que soit la réalisation adoptée, le système proposé permet de sécuriser une transmission radio fréquence bidirectionnelle en détectant la présence d'émetteurs relais entre le circuit d'identification C1 et le badge B1, servant de répéteurs, et en interdisant l'accès au véhicule ou à l'espace clos lorsque de tels émetteurs relais sont détectés par une variation de la fréquence d'oscillation du système rebouclé.

## Revendications

1. Système pour sécuriser une transmission bidirectionnelle de données pour l'accès à un espace clos, en particulier pour l'accès à un véhicule, comprenant un dispositif d'identification (C1), avec circuit d'émission (E1) et circuit de réception (R1), installé dans l'espace clos, et un identifiant (B1) porté par un utilisateur qui souhaite obtenir l'accès, un échange de données entre dispositif d'identification et identifiant étant prévu pour s'établir normalement lorsque la distance entre l'identifiant (B1) et le dispositif d'identification (C1) est inférieure à une limite prédéterminée, l'accès n'étant autorisé que lorsque le dispositif d'identification a authentifié l'identifiant,
**caractérisé par le fait que**, pour empêcher un échange de données d'identification à une distance supérieure à la limite prédéterminée, en particulier par interposition d'un répéteur non autorisé, le système comprend des moyens de commutation (12, 25 ; 46, 52) permettant d'établir un rebouclage momentané du circuit d'émission (E1) du dispositif d'identification, avec un circuit retour de l'identifiant (B1), et le dispositif d'identification (C1) comprend des moyens de mesure (20, 50) de la fréquence de résonance de l'oscillation générée par un tel rebouclage, et des moyens de commande (20, 50) sensibles à la différence entre la fréquence ainsi mesurée et une fréquence de référence pour maintenir l'interdiction d'accès lorsque la différence entre la fréquence mesurée et la fréquence de référence dépasse une valeur prédéterminée.

2. Système selon la revendication 1, **caractérisé par le fait que** les moyens de commutation établissent le rebouclage momentané du circuit d'émission (E1) du dispositif d'identification (C1), lors d'une demande d'identification, et du circuit retour de l'identifiant (B1), lorsque la demande d'identification a été authentifiée par l'identifiant (B1).

3. Système selon la revendication 1 ou 2, **caractérisé par le fait que** le dispositif d'identification (C1) comprend un circuit de réception (R1) avec un récepteur RF (18) et une unité de gestion (20) avec compteur de fréquence, et un circuit d'émission (E1) avec un générateur BF (10), un amplificateur (14), et un commutateur (12) propre à brancher, pour le rebouclage, la sortie du récepteur RF (18) directement à l'entrée de l'amplificateur (14), tandis qu'en fonctionnement normal, l'entrée de cet amplificateur (14) est branchée sur la sortie du générateur BF (10).

4. Système selon la revendication 3, **caractérisé par le fait que** l'identifiant (B1) comprend un récepteur BF (23), en particulier avec contrôle automatique de gain, un circuit de décodage des données (28), une unité de gestion (29), un émetteur RF (30), et un commutateur (25) propre à brancher, pour le rebouclage, la sortie du récepteur BF (23) directement à l'entrée de l'émetteur RF (30), tandis qu'en fonctionnement normal, l'entrée de l'émetteur RF (30) est reliée à l'unité de gestion (29).

5. Système selon la revendication 4, **caractérisé par le fait que** le rebouclage momentané est engendré par l'émission d'un signal d'initialisation par l'émetteur RF (30) de l'identifiant (B1), lequel signal initialise le compteur de l'unité de gestion (20) du dispositif d'identification (C1).

6. Système selon l'une des revendications précédentes, **caractérisé par le fait que** la fréquence de référence, à laquelle est comparée la fréquence de résonance mesurée, est constituée par une valeur initialement mémorisée, qui est apprise par le système.

7. Système selon l'une des revendications précédentes, **caractérisé par le fait que** la modulation dû signal retour est une modulation de fréquence.

8. Système selon la revendication 1 ou 2, **caractérisé par le fait qu'**il est prévu pour fonctionner avec des signaux à transmettre et recevoir de type logique "tout ou rien", et travaille en modulation d'amplitude " ON-OFF " (passant-bloqué).

9. Système selon la revendication 8, **caractérisé par le fait que** le dispositif d'identification (C1) comprend un oscillateur (32) dont la sortie est reliée à un circuit d'émission (33, 34, 35) et dont l'entrée est reliée à un commutateur (52) propre à brancher, pour le rebouclage, la sortie d'un récepteur RF (38) directement à l'entrée de l'oscillateur (32), tandis qu'en fonctionnement normal, l'entrée de cet oscillateur (32) est branchée sur la sortie d'un amplificateur opérationnel (42) dont l'entrée non inverseuse est reliée à la masse par une résistance (43), et l'entrée inverseuse est reliée à la masse par un condensateur (44), ces deux entrées étant reliées respectivement par une résistance (41, 40) à la sortie du récepteur RF (38).

10. Système selon la revendication 9, **caractérisé par le fait que** l'identifiant (B1) comprend un circuit détecteur d'enveloppe (45) dont l'entrée est reliée à un circuit de réception BF (36, 37) et dont la sortie est reliée, d'une part, à un circuit de décodage des données (58) et une unité de gestion (59) et, d'autre part, à un commutateur (46) propre à brancher, pour le rebouclage, la sortie du circuit détecteur d'enveloppe (45) directement à l'entrée d'un émetteur RF (47), tandis qu'en fonctionnement normal, l'entrée de l'émetteur RF (47) est reliée à l'unité de gestion (59).

11. Système selon la revendication 10, **caractérisé par le fait que** l'ensemble de la boucle d'émission-réception présente un certain temps de retard qui, lié à la constante de temps RC, où C est la valeur de la capacité du condensateur (44) et R est la valeur de la résistance (40) reliés à l'entrée inverseuse de l'amplificateur opérationnel (42), engendre une oscillation à une fréquence déterminée.

## Patentansprüche

1. System zur Absicherung einer bidirektionalen Datenübertragung für den Zugang zu einem abgeschlossenen Raum, insbesondere für den Zugang zu einem Fahrzeug, enthaltend eine Identifikationsvorrichtung (C1) mit Sendeschaltung (E1) und Empfangsschaltung (R1), die im abgeschlossenen Raum installiert ist, und einen vom Zugang wünschenden Benutzer mitgeführten Identifizierer (B1), wobei ein Datenaustausch zwischen Identifikationsvorrichtung und Identifizierer vorgesehen ist, der normalerweise dann stattfindet, wenn die Entfernung zwischen Identifizierer (B1) und Identifikationsvorrichtung (C1) geringer ist als ein vorbestimmter Grenzwert, wobei der Zugang nur dann gestattet ist, wenn die Identifikationsvorrichtung den Identifizierer authentifiziert hat,
**dadurch gekennzeichnet, dass** zum Verhindern eines Identifikationsdatenaustauschs in einer Entfernung, die größer ist als der vorbestimmte Grenzwert, insbesondere durch Zwischenschaltung eines nicht autorisierten Abfangsenders, das System Schaltmittel (12, 25; 46, 52) enthält, die es ermöglichen, mit einem zurückführenden Kreis des Identifizierers (B1) eine momentane Rückschleifung der Sendeschaltung (E1) der Identifikationsvorrichtung zu erstellen, und die Identifikationsvorrichtung (C1) Mittel (20, 50) zum Messen der Resonanzfrequenz der durch eine solche Rückschleifung erzeugten Schwingung sowie Steuermittel (20, 50) enthält, die für die Differenz zwischen der so gemessenen Frequenz und einer Bezugsfrequenz empfindlich sind, um die Zugangsunterbindung aufrechtzuerhalten, wenn die Differenz zwischen der gemessenen Frequenz und der Bezugsfrequenz einen vorbestimmten Wert übersteigt.

2. System nach Anspruch 1, **dadurch gekennzeichnet, dass** die Schaltmittel die momentane Rückschleifung der Sendeschaltung (E1) der Identifikationsvorrichtung (C1) bei einer Identifikationsanforderung und des rückführenden Kreises des Identifizierers (B1) dann erstellen, wenn die Identifikationsanforderung vom Identifizierer (B1) authentifiziert wurde.

3. System nach Anspruch 1 oder 2, **dadurch gekennzeichnet, dass** die Identifikationsvorrichtung (C1) eine Empfangsschaltung (R1) mit einem HF-Empfänger (18) und eine Leiteinheit (20) mit einem Frequenzzähler sowie eine Sendeschaltung (E1) mit einem NF-Generator (10), einen Verstärker (14) und einen Schalter (12) enthält, der zur Rückschleifung den Ausgang des HF-Empfängers (18) direkt mit dem Eingang des Verstärkers (14) verbinden kann, während bei Normalbetrieb der Eingang dieses Verstärkers (14) an den Ausgang des NF-Generators (10) angeschlossen ist.

4. System nach Anspruch 3, **dadurch gekennzeichnet, dass** der Identifizierer (B1) einen NF-Empfänger (23), insbesondere mit automatischer Verstärkungssteuerung, eine Datendecodierschaltung (28), eine Leiteinheit (29), einen HF-Sender (30) und einen Schalter (25) enthält, der zur Rückschleifung den Ausgang des NF-Empfängers (23) direkt mit dem Eingang des HF-Senders (30) verbinden kann, während bei Normalbetrieb der Eingang des HF-Senders (30) mit der Leiteinheit (29) verbunden ist.

5. System nach Anspruch 4, **dadurch gekennzeichnet, dass** die momentane Rückschleifung durch Aussenden eines Initialisierungssignals vom HF-Sender (30) des Identifizierers (B1) erzeugt wird, welches Signal den Zähler der Leiteinheit (20) der Identifikationsvorrichtung (C1) initialisiert.

6. System nach einem der vorangehenden Ansprüche, **dadurch gekennzeichnet, dass** die Bezugsfrequenz, mit der die gemessene Resonanzfrequenz verglichen wird, aus einem anfänglich abgespeicherten Wert besteht, der vom System erlernt wurde.

7. System nach einem der vorangehenden Ansprüche, **dadurch gekennzeichnet, dass** die Modulation des Rücksignals eine Frequenzmodulation ist.

8. System nach Anspruch 1 oder 2, **dadurch gekennzeichnet, dass** es zum Betrieb mit zu übertragenden und zu empfangenden Signalen vom logischen Typ "ja oder nein " vorgesehen ist und in "ON-OFF"-Amplitudenmodulation (leitend - gesperrt) arbeitet.

9. System nach Anspruch 8, **dadurch gekennzeichnet, dass** die Identifikationsvorrichtung (C1) einen Oszillator (32) enthält, dessen Ausgang mit einer Sendeschaltung (33, 34, 35) und dessen Eingang mit einem Schalter (52) verbunden ist, der zur Rückschleifung den Ausgang eines HF-Empfängers (38) direkt mit dem Eingang des Oszillators (32) verbinden kann, während bei Normalbetrieb der Eingang dieses Oszillators (32) an den Ausgang eines Operationsverstärkers (42) angeschlossen ist, dessen nichtinvertierender Eingang über einen Widerstand (43) mit der Masse verbunden ist, und der invertierende Eingang über einen Kondensator (44) mit der Masse verbunden ist, wobei diese beiden Eingänge jeweils über einen Widerstand (41, 40) mit dem Ausgang des HF-Empfängers (38) verbunden sind.

10. System nach Anspruch 9, **dadurch gekennzeichnet, dass** der Identifizierer (B1) eine Hüllkurvendetektorschaltung (45) enthält, dessen Eingang mit einer NF-Empfangsschaltung (36, 37) und dessen Ausgang einerseits mit einer Datendecodierschaltung (58) und einer Leiteinheit (59) und andererseits mit einem Schalter (46) verbunden ist, der zur Rückschleifung den Ausgang der Hüllkurvendetektorschaltung (45) direkt mit dem Eingang eines HF-Senders (47) verbinden kann, während bei Normalbetrieb der Eingang des HF-Senders (47) mit der Leiteinheit (59) verbunden ist.

11. System nach Anspruch 10, **dadurch gekennzeichnet, dass** die gesamte Sende-/Empfangsschleife eine gewisse Verzögerungszeit aufweist, die bei Verbindung mit der Zeitkonstante RC, bei der C der Wert der Kapazität des Kondensators (44) und R der Wert des Widerstands (40) ist, die mit dem invertierenden Eingang des Operationsverstärkers (42) verbunden sind, eine Schwingung mit bestimmter Frequenz erzeugt.

## Claims

1. A system for providing security for a two-way data transmission system for affording access to a closed space, in particular for access to a vehicle, comprising an identification device (C1) with an emitter circuit (E1) and a receiver circuit (R1), installed in the closed space, and an identifier (B1) carried by a user who wishes to obtain access, an exchange of data between the identification device and the identifier being arranged to be set up normally when the distance between the identifier (B1) and the identification device (C1) is below a predetermined limit, access being authorised only when the identification device has authenticated the identifier,
**characterised by** the fact that, in order to prevent an exchange of identification data at a distance greater than the predetermined limit, in particular by interposition of an unauthorised repeater, the system includes switching means (12, 25; 46, 52) which enables a momentary feedback to be established from the emitter circuit (E1) of the identifiication device, with a return circuit of the identifier (B1), and the identification device (C1) includes measuring means (20, 50) for measuring the resonant frequency of the oscillation generated by such a feedback, together with control means (20, 50) which are sensitive to the difference between the frequency thus measured and a reference frequency, whereby to maintain the prohibition of access when the difference between the measured frequency and the reference frequency exceeds a predetermined value.

2. A system according to Claim 1, **characterised by** the fact that the switching means establish the momentary feedback from the emitter circuit (E1) of the identification device (C1) during a demand for identification, and from the return circuit of the identifier (B1), when the demand for identification has been authenticated by the identifier (B1).

3. A system according to Claim 1 or Claim 2, **characterised by** the fact that the identification device (C1) comprises a receiver circuit (R1) with a radio frequency receiver (18) and a signal generator unit (20) with a frequency counter, and an emitter circuit (E1) with a low frequency generator (10), an amplifier (14), and a switch (12) which is adapted to connect the output of the radio frequency receiver (18) directly to the input of the amplifier (14) whereby to effect the said feedback, while in normal operation, the input of the said amplifier (14) is connected on the output of the low frequency generator (10).

4. A system according to Claim 3, **characterised by** the fact that the identifier (B1) comprises a low frequency receiver (23), in particular with automatic gain control, a data decoding circuit (28), a signal generator (29), a radio frequency emitter (30), and a switch (25) which is adapted to connect the output of the low frequency receiver (23) directly to the input of the radio frequency emitter (30) whereby to effect the said feedback, while in normal operation, the input of the radio frequency emitter (30) is connected to the signal generator (29).

5. A system according to Claim 4, **characterised by** the fact that the momentary feedback is produced by emission of a starting signal by the radio frequency emitter (30) of the identifier (B1), which signal starts the counter of the signal generator (20) of the identification device (C1).

6. A system according to one of the preceding Claims, **characterised by** the fact that the reference frequency with which the measured resonant frequency is compared is constituted by a value which is initially memorised, and which is learnt by the system.

7. A system according to one of the preceding Claims, **characterised by** the fact that the modulation of the return signal is a frequency modulation.

8. A system according to Claim 1 or Claim 2, **characterised by** the fact that it is arranged to operate with signals to be transmitted and received of the "all or nothing" logic type, and to work in on-off amplitude modulation mode.

9. A system according to Claim 8, **characterised by** the fact that the identification device (C1) comprises an oscillator (32), the output of which is connected to an emitter circuit (33, 34, 35), with its input being connected to a switch (52) which is adapted to connect the output of a radio frequency receiver (38) directly to the input of the oscillator (32) whereby to effect the said feedback, while in normal operation, the input of the said oscillator (32) is connected on the output of an operational amplifier (42), the non-inverting input of which is earthed through a resistor (43), while its inverting input is earthed through a capacitor (44), the two said inputs being connected respectively through a resistor (41, 40) to the output of the radio frequency receiver (38).

10. A system according to Claim 9, **characterised by** the fact that the identifier (B1) comprises an envelope detector circuit (45), the input of which is connected to a low frequency receiver circuit (36, 37), while its output is connected, firstly, to a data decoding circuit (58) and a signal generator (59), and, secondly, to a switch (46) which is adapted to connect the output of the envelope detector circuit (45) directly to the input of a radio frequency emitter (47) whereby to effect the said feedback, while in normal operation, the input of the radio frequency emitter (47) is connected to the signal generator (59).

11. A system according to Claim 10, **characterised by** the fact that the emitter-receiver loop as a whole has a certain delay time which, linked to the time constant RC where C is the value of the capacity of the capacitor (44) and R is the value of the resistor (40), connected to the inverting input of the operational amplifier (42), sets up an oscillation at a predetermined frequency.
